# EUROPEAN PATENT APPLICATION

(11) **EP 2 279 785 A2**
(43) Date of publication of application: **02.02.2011**
(21) Application number: 10192091.6
(22) Date of filing: 14.03.2006
(51) Int. Cl.: B01D 53/81, F01N 3/08, F01N 3/18, B01D 53/86, B01D 53/94

(54) **Exhaust gas purifier**

(30) Priority: 29.03.2005 JP 2005093798; 29.03.2005 JP 2005093802
(62) Divisional of application: 06729030.4
(71) Applicant: Yanmar Co. Ltd., Osaka-shi, Osaka 530-0013 (JP)
(72) Inventor: Kanda, Toshihisa, Osaka-shi Osaka 530-013 (JP); Matsubayashi, Shogo, Osaka-shi Osaka 530-013 (JP)
(74) Representative: Merrifield, Sarah Elizabeth

(57) **Abstract**

An exhaust gas purifier capable of, in an internal combustion engine or other combustion instrument mainly driven under excess air conditions, efficiently removing nitrogen oxides from exhaust gas. The exhaust gas purifier has a nitrogen oxide adsorbent capable of temporarily adsorbing nitrogen oxide even in an excessive air atmosphere and desorbing the adsorbed nitrogen oxide by heating or reducing atmosphere and has adsorbed substance desorbing means disposed on an exhaust gas upstream side of the nitrogen oxide adsorbent and capable of heating the exhaust gas or air or converting the exhaust gas or air into a reducing atmosphere. The exhaust gas purifier also has a combustion apparatus disposed on an exhaust gas downstream side of the nitrogen oxide adsorbent. The nitrogen oxide adsorbent is made of metal oxide which does not contain noble metal.

## Description

### TECHNICAL FIELD

The present invention relates to an apparatus for purifying exhaust gas of an internal combustion engine such as a diesel engine, a gas engine, a gasoline engine, and a gas turbine engine or a combustion device such as an incinerator and a boiler. More particularly, the present invention relates to an exhaust gas purifier suitably removes nitrogen oxide while being installed within an exhaust gas passage of the internal combustion engine or the like which is normally operated in an excessive air state.

### BACKGROUND ART

A target substance subject to exhaust gas purification is a particulate matter such as nitrogen oxide, carbon monoxide, unburned hydrocarbon, soot and the like. Various apparatuses for purifying these substances have been conventionally developed.

As an apparatus for reducing the nitrogen oxide (NOx), a denitration apparatus or the like has come into practical use, in which a reduction catalyst using an ammonia or an urea as a reducing agent is installed in an exhaust passage, thereby selectively reducing the nitrogen oxide. Further, in a comparatively compact gas engine or an automotive gasoline engine, there has been developed a three-way catalyst which can simultaneously decompose three elements comprising the nitrogen oxide, the carbon monoxide (CO) and the unburned hydrocarbon (HC), and the three-way catalyst contributes to an effective purification of the exhaust gas.

However, it has been known that the three-way catalyst effectively achieves a purifying operation in the case that the three-way catalyst is operated at a theoretical air fuel ratio or within a range close thereto, but is not effectively operated under the other conditions, particularly in exhaust gas in which air (oxygen) is excessive.

In order to cope with this, in the gas or gasoline engine operated in the excessive air state, a nitrogen oxide occluding catalyst system has come into practical use, which temporarily occludes the nitrogen oxide in an occluding agent at a time of being operated under the excessive air (oxygen) condition, and next discharges and reduces the occluded nitrogen oxide by being operated under the excessive fuel condition.

Conventionally, various kinds of combinations of noble metal and alkaline metal oxide or alkaline-earth metal oxide have been developed as the nitrogen oxide occluding type catalyst (for example, see Patent Document 1). In such catalysts, during excessive air combustion (lean burn) of a normal operation, an NO in the exhaust gas is oxidized to obtain an NO₂ on the noble metal catalyst, the NO₂ is caused to react with a basic oxide of the alkaline metal or alkaline-earth metal, and the NOx is occluded in the form of a nitrate. During excessive fuel combustion (rich operation) of a regenerating operation, the NO₂ desorbed from the oxide is reduced to obtain an N₂ by reducing substance such as hydrocarbon and the Co on the noble metal catalyst, and the detoxified nitrogen is discharged.

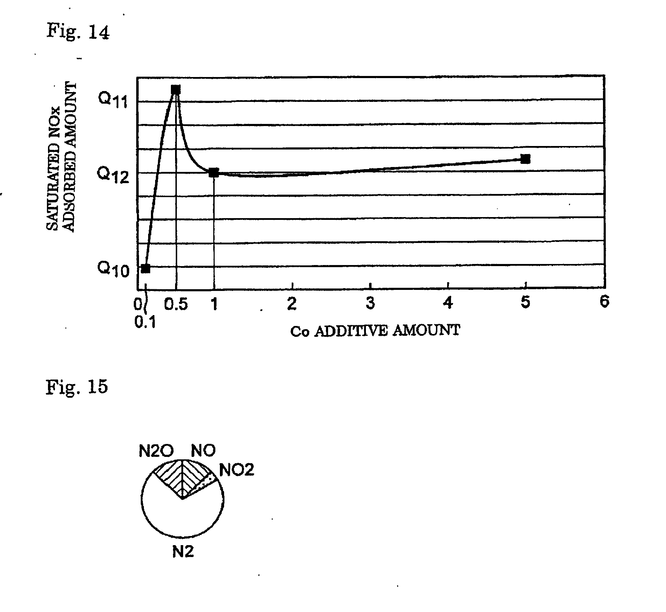

Fig. 15 is a graph showing a ratio of substances discharged from the nitrogen oxide occluding catalyst by the regenerating operation in the case of the use of the nitrogen oxide occluding type catalyst formed by the combination of the noble metal and the alkaline metal oxide or alkaline-earth metal oxide. About 75% of the substance is discharged in the form of the N₂ and remaining 25% is discharged in the form of the NOx such as the NO, the N₂O, and the NO₂.
Patent Document 1: Japanese Patent Publication laid-Open No. 2001-000863

### DISCLOSURE OF THE INVENTION

### PROBLEMS TO BE SOLVED BY THE INVENTION

A denitration apparatus which selectively reduces the nitrogen oxide using ammonia or urea, and the like is applied to a relatively large industrial internal combustion engine or a combustion instrument. However, the apparatus itself is large and extremely expensive, and a maintenance cost of the reducing agent such as ammonia and urea is also increased. Further, there is a high possibility that the unconsumed ammonia is discharged into atmosphere.

As described above, the three-way catalyst cannot exert a catalyst function in the internal combustion engine or the combustion instrument operated under the excessive air condition.

In the nitrogen oxide occluding type catalyst which is commercialized in the small gas engine and automobile gasoline engine, the purifier becomes expensive because the noble metal is always contained as the catalyst component, an operation range (such as temperature and SV value) where the reduction can completely be performed is restricted to a narrow range, and complicated lean and rich control (control of air and fuel supply amounts) is required on an engine side.

### (Object of the Invention)

An object of the invention is to provide an exhaust gas purifier which can efficiently remove and detoxify the nitrogen oxide in the exhaust gas and discharge the nitrogen to the atmosphere at low cost in the internal combustion engine or combustion instrument which is operated under the excessive air condition. Another object of the invention is to suppress deterioration of the nitrogen oxide adsorbent, caused by poisoning of sulfur, to sufficiently exert performance even in the fuel containing a large amount of sulfur component.

### PROBLEMS TO BE SOLVED BY THE INVENTION

In order to solve the problem, a first aspect according to the present invention provides an exhaust gas purifier which is installed in an exhaust passage of an internal combustion engine or a combustion instrument, the exhaust gas purifier characterized in that a nitrogen oxide adsorbent is disposed in the exhaust passage, and the nitrogen oxide adsorbent is made of lithium composite oxide expressed by a general formula LiAxOy or LiAxPO₄, where A is at least one kind of element selected from an element group of manganese (Mn), nickel (Ni), cobalt (Co), vanadium (V), chromium (Cr), iron (Fe), titanium (Ti), scandium (Sc), and yttrium (Y), and the at least one kind of element A and lithium (Li) are elements constituting the general formula LiAxOy or LiAxPO₄. For example, the nitrogen oxide adsorbent is made of the lithium composite oxide such as lithium manganate (LiMn₂O₄), lithium titanate (Li₂TiO₃), and lithium manganate phosphate (LiMnPO₄),

Currently the composite oxide of the lithium (Li) of the alkaline metal and transition metal such as manganese (Mn) is produced and distributed in large quantity in the market as a positive electrode material for lithium-ion battery, so that the composite oxide can easily be obtained at low cost. Therefore, cost reduction of the apparatus cost can be achieved. Additionally, the composite oxide reacts easily with lattice oxygen because the composite oxide contains the transition metal such as manganese (Mn), the composite oxide rapidly oxidizes the NO to obtain the NO₂, and the saturated NOx adsorbed amount is increased, so that an NOx adsorbing power is improved.

In the exhaust gas purifier according to the first aspect of the invention, a second aspect according to the invention is characterized in that noble metal is added to the nitrogen oxide adsorbent.

When the noble metal is added, the apparatus cost is increased compared with the case in which the noble metal is not contained. However, the positive electrode material for lithium-ion battery which is distributed at low cost in large quantity in the market is utilized, which allows the NOx adsorbing power to be improved while the cost increase is suppressed for the overall of the nitrogen oxide adsorbent.

In the exhaust gas purifier according to the second aspect of the invention, a third aspect according to the invention is characterized in that the noble metal is platinum (Pt) and the lithium composite oxide is lithium titanate (Li₂TiO₃).

The use of the lithium titanate (Pt-Ili₂TiO₃) to which platinum is added as the noble metal improves a SOx-resistant property to prevent the poisoning of the nitrogen oxide adsorbent, which lifetime to be lengthened.

In the exhaust gas purifier as in any one of the first to third aspects of the invention, a fourth aspect according to the invention is characterized in that the nitrogen oxide adsorbent is supported by a support made of aluminum oxide (Al₂O₃) and/or anatase titanium oxide (TiO₂).

When the nitrogen oxide adsorbent is supported by the porous support having a large specific surface area, the NOx adsorbing power is further improved. Note that the anatase titanium oxide (TiO₂) having the large specific surface area is stable at low temperatures against rutile titanium oxide which is stable at high temperatures.

In the exhaust gas purifier as in any one of the first to fourth aspects of the invention, a fifth aspect according to the invention is characterized in that an additive amount as lithium oxide (Li₂O) ranges from 10 to 20 weight% in the nitrogen oxide adsorbent.

When the lithium oxide (Li₂O) is added with the weight proportion described above, the NOx adsorbing power is further improved.

In the exhaust gas purifier as in any one of the first to fifth aspects of the invention, a sixth aspect according to the invention is characterized in that the nitrogen oxide adsorbent is burned in a range of 400 °C to 500 °C.

By burning the nitrogen oxide adsorbent in the above temperature range, the large specific surface area can be ensured while the saturated NOx adsorbed amount is increased, and thus the NOx adsorbing power can further be improved. Most preferably the nitrogen oxide adsorbent is burned at 450 °C.

In the exhaust gas purifier as in any one of the second to sixth aspects of the invention, a seventh aspect according to the invention is characterized in that adsorbed substance desorbing means is disposed on an exhaust gas upstream side of the nitrogen oxide adsorbent and an combustion apparatus is disposed on an exhaust gas downstream side of the nitrogen oxide adsorbent.

According to the above-mentioned configuration, during the normal operation of the internal combustion engine, particularly during the normal operation under the excessive air condition, the nitrogen oxide such as the NO and the NO₂ is easily generated, and the generated nitrogen oxide such as the NO and the NO₂ is temporarily adsorbed to the nitrogen oxide adsorbent. When the NOx adsorbed amount reaches a predetermined amount, the nitrogen oxide adsorbing means and the combustion apparatus are operated to perform the regenerating operation. During the regenerating operation, using the adsorbed substance desorbing means, the nitrogen oxide adsorbent is heated or the gas is converted into the reducing atmosphere, and the nitrogen oxide is desorbed. In the case where the noble metal is not contained in the nitrogen oxide adsorbent, most nitrogen is desorbed in the form of the nitrogen oxide such as the NO and the NO₂, and the desorbed NOx is reduced into the N₂ in an over-rich combustion region on the downstream side of the combustion apparatus and detoxified and discharged to the atmosphere.

In the case where the CO and hydrocarbon are generated in the over-rich combustion region of the adsorbed substance desorbing means or combustion apparatus during the regenerating operation, the CO and hydrocarbon are oxidized to obtain a CO₂ and an H₂O in a lean fuel combustion region of the combustion apparatus and detoxified and discharged to the atmosphere. Because the combustion apparatus has low combustion temperatures in the lean fuel combustion region, the N₂ desorbed by the adsorbed substance desorbing means is not oxidized again nor returned to the nitrogen oxide.

Thus, when the combustion apparatus is disposed on the downstream side of the nitrogen oxide adsorbent, similar to the case where the use of the catalyst containing the noble metal, the nitrogen oxide in the exhaust gas can economically be detoxified and discharged to the atmosphere even by the inexpensive nitrogen oxide adsorbent which does not contain the noble metal. Additionally, the normal operation and the regenerating operation can be performed without performing the complicated lean and rich control on the engine side.

In the exhaust gas purifier as in any one of the second to seventh aspects of the invention, an eighth aspect according to the present invention is characterized in that the combustion apparatus is a fuel lean-burn type.

According to the above-mentioned configuration, in the case where the nitrogen oxide adsorbent contains the noble metal, because most substances desorbed from the nitrogen oxide adsorbent are reduced into the N₂ by the catalytic action of the noble metal, the combustion apparatus which performs the lean fuel combustion to detoxify only the CO and the hydrocarbon can be used as the combustion apparatus disposed on the downstream side. Therefore, fuel consumption can be saved.

In the exhaust gas purifier as in any one of the third to seventh aspects of the invention, a ninth aspect according to the invention is characterized in that the adsorbed substance desorbing means is set to a temperature near the burning temperature or to the burning temperature or less. For example, when the burning temperature is 450 °C, the combustion is controlled so as to be performed at a temperature near 450 °C or a temperature at 450 °C or less.

As with the above-mentioned configuration, when the temperature is suppressed to the temperature near the burning temperature or the burning temperature or less, sintering and destruction by fire of the lithium (Li) are prevented, which allows performance deterioration to be suppressed to lengthen a lifetime of the nitrogen oxide adsorbent.

In the exhaust gas purifier according to the first aspect of the invention, a tenth aspect according to the invention is characterized in that a sulfur oxide adsorbent is disposed on an exhaust gas upstream side of the nitrogen oxide adsorbent.

According to the above-mentioned configuration, during the normal operation of the internal combustion engine, because the sulfur oxide in the exhaust gas is adsorbed to the sulfur oxide adsorbent before reaching the nitrogen oxide adsorbent, the nitrogen oxide adsorbent is not poisoned by the sulfur, and the decrease in nitrogen oxide adsorbed amount caused by the sulfur poisoning can be prevented. In addition, durability is also improved. Particularly, the lithium composite oxide (for example, LiMn₂O₄) made of a transition metal element except for the titanium (Ti) has a lower SOx absorbing property compared with the lithium composite oxide containing the titanium (Ti), the poisoning of the nitrogen oxide adsorbent can be prevented by disposing the sulfur oxide adsorbent as described above.

In the exhaust gas purifier according to the tenth aspect of the invention, an eleventh aspect according to the invention is characterized in that the sulfur oxide adsorbent contains copper oxide and zirconium oxide.

According to the above-mentioned configuration, because the copper oxide and zirconium oxide have the good sulfur oxide (SOx) absorbing power, the sulfur oxide adsorbed amount can be increased.

In the exhaust gas purifier according to the eleventh aspect of the invention, a twelfth aspect according to the invention is characterized in that a metal ratio of copper and zirconium is 1:1 in the sulfur oxide adsorbent.

According to the above-mentioned configuration, the sulfur oxide adsorbed amount can be increased.

In the exhaust gas purifier according to the eleventh or twelfth aspect of the invention, a thirteenth aspect according to the invention is characterized in that adsorbed substance desorbing means is disposed on an exhaust gas upstream side of the sulfur oxide adsorbent and an combustion apparatus is disposed on an exhaust gas downstream side of the nitrogen oxide adsorbent.

The copper oxide and zirconium oxide can reversibly adsorb and desorb the sulfur oxide. Therefore, in the exhaust gas purifier in which the nitrogen oxide desorbing means provided on the upstream side of the nitrogen oxide adsorbent while the combustion apparatus is provided on the downstream side, by switching between the normal operation and the regenerating operation, the nitrogen oxide is adsorbed to the nitrogen oxide adsorbent and the sulfur oxide is simultaneously adsorbed to the sulfur oxide adsorbent during the excessive air combustion of the normal operation, and then the nitrogen oxide and sulfur oxide adsorbed to the adsorbents are desorbed during the over-rich combustion of the regenerating operation, and the nitrogen oxide can be detoxified on the downstream side of the combustion apparatus and discharged to the atmosphere.

A fourteenth aspect according to the invention provides an exhaust gas purifier which is installed in an exhaust passage of an internal combustion engine or a combustion instrument, the exhaust gas purifier including a nitrogen oxide adsorbent which temporarily adsorbs nitrogen oxide even in an excessive air atmosphere and desorbs the adsorbed nitrogen oxide by heating or reducing atmosphere; adsorbed substance desorbing means which is disposed on an exhaust gas upstream side of the nitrogen oxide adsorbent, the adsorbed substance desorbing means heating the exhaust gas or air or converting the exhaust gas or air into a reducing atmosphere; and a combustion apparatus which is disposed on an exhaust gas downstream side of the nitrogen oxide adsorbent, wherein the nitrogen oxide adsorbent is made of metal oxide which does not contain noble metal.

In the exhaust gas purifier according to the fourteenth aspect of the invention, during the normal operation of the engine, particularly during the normal operation under the excessive air condition, the nitrogen oxide such as the NO and the NO₂ is easily generated, and the generated nitrogen oxide such as the NO and the NO₂ is temporarily adsorbed to the nitrogen oxide adsorbent. When the NOx adsorbed amount reaches a predetermined amount, the nitrogen oxide adsorbing means and the combustion apparatus are operated to perform the regenerating operation. During the regenerating operation, using the adsorbed substance desorbing means, the nitrogen oxide adsorbent is heated or the gas is converted into the reducing atmosphere, and the nitrogen oxide is desorbed. Because the noble metal is not contained in the nitrogen oxide adsorbent, most nitrogen is desorbed in the form of the nitrogen oxide such as the NO and the NO₂ while a little amount of nitrogen is desorbed in the form of the N₂, and the desorbed the NOx is reduced into the N₂ in the over-rich combustion region of the combustion apparatus on the downstream side of the nitrogen oxide adsorbent and detoxified and discharged to the atmosphere.

On the other hand, the CO and the hydrocarbon generated in the over-rich combustion region of the combustion apparatus is oxidized into the CO₂ in the excessive air combustion region of the combustion apparatus and discharged to the atmosphere. Because of the low temperature in the excessive air combustion region, the N₂ desorbed by the adsorbed substance desorbing means is not oxidized again nor returned to the nitrogen oxide.

Thus, when the combustion apparatus is disposed on the downstream side of the nitrogen oxide adsorbent, similar to the case where the use of the catalyst containing the noble metal, the nitrogen oxide in the exhaust gas can economically be detoxified and discharged to the atmosphere even by the inexpensive nitrogen oxide adsorbent which does not contain the noble metal. Additionally, the normal operation and the regenerating operation can be performed without performing the complicated lean and rich control on the engine side.

In the exhaust gas purifier according to the fourteenth aspect of the invention, a fifteenth aspect according to the invention is characterized in that the nitrogen oxide adsorbent is made of transition metal oxide.

As with the above-mentioned configuration, the use of the transition metal oxide can easily react with the lattice oxygen to rapidly oxidize the NO into the NO₂. Therefore, the saturated NOx adsorbed amount and the NOx adsorbed amount per unit time can be increased in the nitrogen oxide adsorbent.

In the exhaust gas purifier according to the fifteenth aspect of the invention, a sixteenth aspect according to the invention is characterized in that the nitrogen oxide adsorbent is made of transition metal oxide containing manganese oxide and zirconium oxide.

According to the above-mentioned configuration, because the manganese oxide has a strong oxidizing power, the NO₂ is easily generated, and the saturated NOx adsorbed amount and the NOx adsorbed amount per unit time can be increased in the nitrogen oxide adsorbent.

In the exhaust gas purifier according to the sixteenth aspect of the invention, a seventeenth aspect according to the invention is characterized in that a compounding ratio of manganese oxide and zirconium oxide in the nitrogen oxide adsorbent is 1:1 in terms of metal ratio.

According to the above-mentioned configuration, in the transition metal oxide containing the manganese oxide and zirconium oxide, the saturated NOx adsorbed amount of the NOx adsorbent can be increased as much as possible.

In the exhaust gas purifier according to the sixteenth or seventeenth aspect of the invention, an eighteenth aspect according to the invention is characterized in that the nitrogen oxide adsorbent further contains yttrium oxide.

When the yttrium oxide is added as with the above-mentioned configuration, because the nitrate is easily formed, the yttrium oxide can react with the generated NO₂ to absorb the nitrogen oxide in the state of the nitrate. Therefore, the saturated NOx adsorbed amount can further be increased.

In the exhaust gas purifier according to the eighteenth aspect of the invention, a nineteenth aspect according to the invention is characterized in that the yttrium oxide ranges from 0.1 to 0.5 weight% in a whole of the nitrogen oxide adsorbent.

When yttrium is added in the above range, the saturated NOx adsorbed amount is extremely increased, and particularly the largest increase is obtained near 0.2 weight% in the saturated NOx adsorbed amount.

In the exhaust gas purifier according to the twentieth aspect of the invention, a sixteenth aspect according to the invention is characterized in that the nitrogen oxide adsorbent further contains aluminum oxide.

The aluminum oxide is used as the support for the manganese oxide and zirconium oxide. Because the aluminum oxide is porous and has the high specific surface area, a utilization ratio of an active site is improved, and the saturated NOx adsorbed amount and the NOx adsorbed amount per unit time are increased.

In the exhaust gas purifier according to the twentieth aspect of the invention, a twenty-first aspect according to the invention is characterized in that proportions of manganese oxide and zirconium oxide in the nitrogen oxide adsorbent range from 3 to 10 weight% in a whole of the nitrogen oxide adsorbent.

As with the above-mentioned configuration, when the proportions of the manganese oxide and zirconium oxide range from 3 to 10 weight% in the whole of nitrogen oxide adsorbent, the saturated NOx adsorbed amount and the NOx adsorbed amount per unit time are increased in the nitrogen oxide adsorbent. Particularly the largest increase is obtained near 5 weight%.

In the exhaust gas purifier according to the fifteenth aspect of the invention, a twenty-second aspect according to the invention is characterized in that the nitrogen oxide adsorbent is made of transition metal oxide containing cobalt oxide and zirconium oxide.

The cobalt oxide has the strong oxidizing power similar to that of the manganese oxide described in fifteenth aspect. Thus, the NO₂ can easily be generated to increase the NOx occluded amount by containing the cobalt oxide.

In the exhaust gas purifier according to the twenty-second aspect of the invention, a twenty-third aspect according to the invention is characterized in that cobalt oxide ranges from 0.1 to 1 weight% in a whole of the adsorbent in the nitrogen oxide adsorbent.

As with the above-mentioned configuration, in the transition metal oxide containing the cobalt oxide and zirconium oxide, when the cobalt oxide is contained in the range of 0.1 to 1 weight% in the whole of adsorbent, the saturated NOx adsorbed amount and the NOx adsorbed amount per unit time are increased in the nitrogen oxide adsorbent. Particularly the largest increase is obtained near 0.5 weight%.

In the exhaust gas purifier according to the fourteenth to twenty-third aspects of the invention, a twenty-fourth aspect according to the invention is characterized in that a sulfur oxide adsorbent is disposed on an exhaust gas upstream side of the nitrogen oxide adsorbent.

According to the above-mentioned, because the sulfur oxide in the exhaust gas is adsorbed to the sulfur oxide adsorbent on an upstream side of the exhaust gas before reaching the nitrogen oxide adsorbent, the nitrogen oxide adsorbent is not poisoned by the sulfur, and the decrease in nitrogen oxide adsorbed amount caused by the sulfur poisoning can be prevented.
In addition, the durability is also improved.

In the exhaust gas purifier according to the twenty-fourth aspect of the invention, a twenty-fifth aspect according to the invention is characterized in that the sulfur oxide adsorbent contains copper oxide and zirconium oxide.

According to the above-mentioned configuration, the copper oxide and zirconium oxide has the good sulfur oxide (SOx) absorbing power, and can reversibly adsorb and desorb the sulfur oxide. Therefore, in the exhaust gas purifier in which the nitrogen oxide desorbing means provided on the upstream side of the nitrogen oxide adsorbent while the combustion apparatus is provided on the downstream side, by switching between the normal operation and the regenerating operation, the nitrogen oxide is adsorbed to the nitrogen oxide adsorbent and the sulfur oxide is simultaneously adsorbed to the sulfur oxide adsorbent during the excessive air combustion of the normal operation, and then the nitrogen oxide and sulfur oxide adsorbed to the adsorbents are desorbed during the over-rich combustion of the regenerating operation, and the nitrogen oxide can be detoxified on the downstream side of the combustion apparatus and discharged to the atmosphere.

In the exhaust gas purifier according to the twenty-fourth aspect of the invention, a twenty-sixth aspect according to the invention is characterized in that a metal ratio a metal ratio of copper and zirconium is 1:1 in the sulfur oxide adsorbent.

According to the above-mentioned configuration, the sulfur oxide adsorbed amount can be increased.

In the exhaust gas purifier according to the twenty-fourth aspect of the invention, a twenty-seventh aspect according to the invention is characterized in that the sulfur oxide adsorbent contains noble metal and lithium titanium composite oxide.

According to the above-mentioned configuration, the sulfur oxide and the nitrogen oxide can efficiently be detoxified and discharged to the atmosphere similar to the sulfur oxide adsorbent according to the twelfth aspect in which the copper oxide and zirconium oxide are used.

Further features and aspects of the present invention are set out in the following clauses:
1. An exhaust gas purifier being installed in an exhaust passage of an internal combustion engine or a combustion instrument,
   the exhaust gas purifier characterized in that a nitrogen oxide adsorbent is disposed in the exhaust passage, and the nitrogen oxide adsorbent is made of lithium composite oxide expressed by a general formula LiAxOy or LiAxPO₄, where A is at least one kind of element selected from an element group of manganese (Mn), nickel (Ni), cobalt (Co), vanadium (V), chromium (Cr), iron (Fe), titanium (Ti), scandium (Sc), and yttrium (Y), and the at least one kind of element A and lithium (Li) are elements constituting the general formula LiAxOy or LiAxPO₄.
2. The exhaust gas purifier according to clause 1, characterized in that noble metal is added to the nitrogen oxide adsorbent.
3. The exhaust gas purifier according to clause 2, characterized in that the noble metal is platinum (Pt) and the lithium composite oxide is lithium titanate (Li₂TiO₃).
4. The exhaust gas purifier as in any one of clauses 1 to 3, characterized in that the nitrogen oxide adsorbent is supported by a support made of aluminum oxide (Al₂O₃) and/or anatase titanium oxide (TiO₂).
5. The exhaust gas purifier as in any one of clauses 1 to 4, characterized in that an additive amount as lithium oxide (Li₂O) ranges from 10 to 20 weight% in the nitrogen oxide adsorbent.
6. The exhaust gas purifier as in any one of clauses 1 to 5, characterized in that the nitrogen oxide adsorbent is burned in a range of 400 °C to 500 °C.
7. The exhaust gas purifier as in any one of clauses 2 to 6, characterized in that adsorbed substance desorbing means is disposed on an exhaust gas upstream side of the nitrogen oxide adsorbent and an combustion apparatus is disposed on an exhaust gas downstream side of the nitrogen oxide adsorbent.
8. The exhaust gas purifier as in any one of clauses 2 to 7, characterized in that the combustion apparatus is a fuel lean-burn type.
9. The exhaust gas purifier according to clause 6 or 7, characterized in that the adsorbed substance desorbing means is set to a temperature near the burning temperature or to the burning temperature or less.
10. The exhaust gas purifier according to clause 1, characterized in that a sulfur oxide adsorbent is disposed on an exhaust gas upstream side of the nitrogen oxide adsorbent.
11. The exhaust gas purifier according to clause 10, characterized in that the sulfur oxide adsorbent contains copper oxide and zirconium oxide.
12. The exhaust gas purifier according to clause 11, characterized in that a metal ratio of copper and zirconium is 1:1 in the sulfur oxide adsorbent.
13. The exhaust gas purifier as in any one of clauses 10 to 12, characterized in that adsorbed substance desorbing means is disposed on an exhaust gas upstream side of the sulfur oxide adsorbent and an combustion apparatus is disposed on an exhaust gas downstream side of the nitrogen oxide adsorbent.

### EFFECT OF THE INVENTION

Thus, according to the invention, the lithium composite oxide containing the lithium (Li) utilizes as the positive electrode material for lithium-ion battery and the transition metal such as the manganese (Mn) is used as the nitrogen oxide adsorbent, so that the nitrogen oxide adsorbent having the good NOx absorbing power can be provided at low cost. Therefore, exhaust gas purifier having the large saturated NOx adsorbed amount can be provided at low cost. Particularly, the platinum-added lithium titanate is used as the lithium titanium composite oxide, or the sulfur oxide adsorbent is disposed on the exhaust gas upstream side of the nitrogen oxide adsorbent. Therefore, the poisoning of the nitrogen oxide adsorbent can be prevented.

The provision of the low-cost nitrogen oxide adsorbent made of the metal oxide containing no noble metal, particularly made of the transition metal oxide can decrease the apparatus cost while easily and efficiently detoxifying and discharging the nitrogen oxide.

### BRIEF DESCRIPTION OF THE DRAWINGS

Fig. 1 is a schematic view showing a first embodiment of an exhaust gas purifier to which the invention is applied.
Fig. 2 is a schematic view showing a second embodiment of an exhaust gas purifier to which the invention is applied.
Fig. 3 is a graph in which saturated NOx adsorbed amounts of LiMn₂O₃, LiMnPO₄, and Pt-Li₂TiO₃ are compared.
Fig. 4 is a graph showing a difference in a saturated NOx adsorbed amount between an NOx adsorbent made of Pt-Li₂TiO₃ of the invention and an NOx adsorbent made of Pt-BaO₂ system of a comparative example, and Fig. 4 shows the case in which an SOx is contained in the exhaust gas and the case in which the SOx is not contained in the exhaust gas.
Fig. 5 is a graph showing a change in a saturated NOx adsorbed amount in the case where a weight ratio of the NOx adsorbent made of Pt-Li₂TiO₃ and a support is changed.
Fig. 6 is a graph showing a relationship between a saturated NOx adsorbed amount and an additive amount as lithium oxide (Li₂O) in the NOx adsorbent.
Fig. 7 is a graph showing a relationship between a specific surface area and a burning temperature in producing the NOx adsorbent.
Fig. 8 is a graph showing a relationship between a saturated NOx adsorbed amount and a temperature of adsorbent desorbing means in the case where the NOx adsorbent is burned at 450 °C.
Fig. 9 is a graph showing a component ratio of substance desorbed from the NOx adsorbent of the present invention.
Fig. 10 is a graph showing a saturated NOx adsorbed amount of NOx adsorbents made of various transition metal oxides.
Fig. 11 is a graph showing a saturated NOx adsorbed amount in various metal ratios in an NOx adsorbent made of manganese oxide and zirconium oxide.
Fig. 12 is a graph showing a change in a saturated NOx adsorbed amount to a change in additive amount of yttrium oxide in a structure the yttrium oxide is added to the NOx adsorbent made of manganese oxide and zirconium oxide.
Fig. 13 is a graph showing the change in a saturated NOx adsorbed amount to a change in ratio of the whole of a manganese oxide and zirconium oxide in the NOx adsorbent to which aluminum oxide is added to the NOx adsorbent made of the manganese oxide and zirconium oxide and having a metal ratio of 1:1.
Fig. 14 is a graph showing the change in a saturated NOx adsorbed amount to a change in additive amount of cobalt in the NOx adsorbent made of cobalt oxide and zirconium oxide.
Fig. 15 is a graph showing a ratio of desorbed substances of a conventional nitrogen oxide occluding catalyst containing a noble metal.

### EXPLANATIONS OF LETTERS OR NUMERALS

1 internal combustion engine
2 exhaust passage
2a and 2b branch exhaust passage
2c downstream-side exhaust passage
3 adsorbed substance desorbing means
4 NOx adsorbent
5 combustion apparatus
40 fine particle filter
42 SOx adsorbent
X1 over-rich combustion region
X2 lean fuel combustion region

### BEST MODES FOR CARRYING OUT THE INVENTION

### (First Embodiment of the Invention)

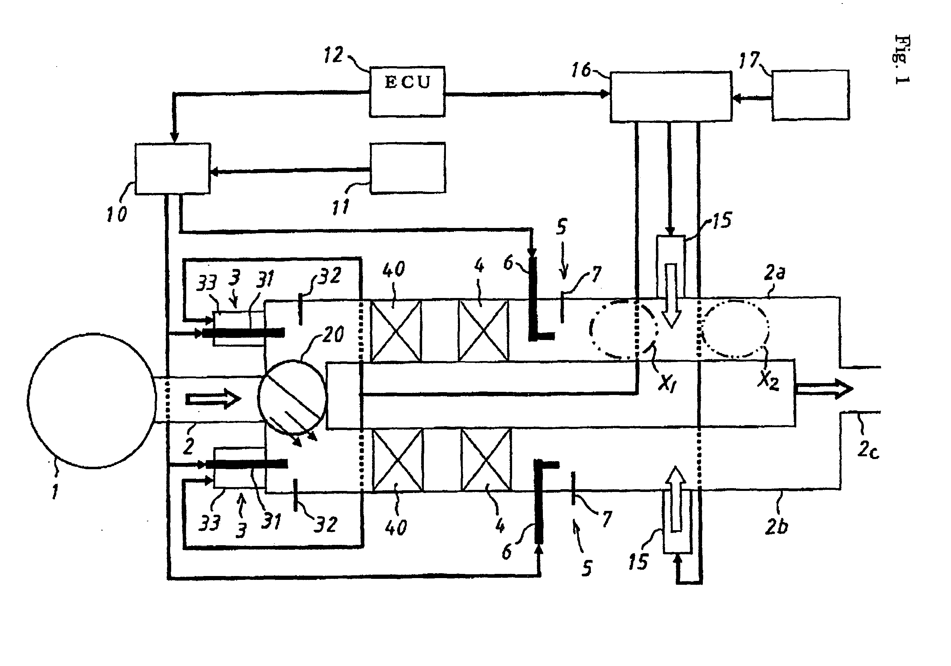

Fig. 1 shows a first embodiment of an exhaust gas purifier according to the invention. An exhaust passage 2 of an internal combustion engine 1 or a combustion instrument is branched into first and second branch exhaust passages 2a and 2b, a switching valve 20 is provided in a branch portion on an upstream side of the exhaust gas, and the branch exhaust passages 2a and 2b are merged at an end portion on a downstream side of the exhaust gas and connected to a downstream-side exhaust passage 2c. The exhaust gas from the internal combustion engine 1 is selectively discharged to one of the branch exhaust passages 2a and 2b by switching the switching valve 20, and the regenerating operation can be performed in the other branch exhaust passage. Examples of the internal combustion engine 1 include a diesel engine, a gas engine, a gasoline engine, and a gas turbine engine, and an industrial boiler can be cited as an example of the combustion instrument. The internal combustion engine 1 and the combustion instrument are mainly operated under the excessive air condition.

In each of the branch exhaust passages 2a and 2b, an adsorbed substance desorbing means 3, a fine particle filter 40, a nitrogen oxide adsorbent (hereinafter referred to as "NOx adsorbent") 4, and a combustion apparatus 5 are disposed at intervals in an exhaust gas flowing direction in the order from the exhaust gas upstream side.

The NOx adsorbent 4 is made of the lithium composite oxide expressed by a transition metal, particularly by the general formula LiAxOy or LiAxPO₄ formed by at least one kind of element A and the lithium (Li). The element A is selected from the element group of manganese (Mn), nickel (Ni), cobalt (co), vanadium (V), chromium (Cr), iron (Fe), titanium (Ti), scandium (Sc), and yttrium (Y). Specific suitable examples of the general formula LiAxOy include lithium manganate (LiMn₂O₄) and lithium titanate (Li₂TiO₃), and a specific suitable example of the general formula LiAxPO₄ includes lithium manganate phosphate (LiMnPO₄).

In the present embodiment, platinum (Pt) which is of noble metal is further added to the lithium composite oxide, and lithium titanate (Li₂TiO₃) containing titanium (Ti) is used as the lithium composite oxide in order to maintain the NOx absorbing power and SOx-resistant property at higher levels.

In the nitrogen oxide adsorbent 4, an additive amount which is of the lithium oxide Li₂O ranges from 10 to 20 weight%. The nitrogen oxide adsorbent 4 is burned in the range of 400 °C to 500 °C, and preferably the nitrogen oxide adsorbent 4 is burned at about 450 °C.

In the first embodiment, the platinum and lithium titanate (Li₂TiO₃) are supported by a support made of aluminum oxide (Al₂O₃) and/or anatase titanium oxide (TiO₂).

The adsorbed substance desorbing means 3 disposed on the most upstream side of the exhaust gas includes a fuel nozzle 31, an igniter 32, and air supply means 33. The fuel nozzle 31 is connected to a fuel tank 11 through a fuel amount regulating apparatus 10. In the fuel nozzle 31, a supply amount and supply timing of the fuel are controlled by an electronic control unit (hereinafter referred to as '"ECU") 12. The air supply means 33 is connected to an air supply source 17 through an air amount regulating apparatus 16. In the air amount regulating apparatus 16, the supply amount and supply timing of the fuel are controlled by the ECU 12. For example, the over-rich combustion is performed by controlling the supply amount and supply timing of the fuel and the supply amount and supply timing of the air, and the corresponding branch exhaust passage 2a or 2b can be heated while converted into the reducing atmosphere.

The supply amount of the fuel and supply amount of the air are set such that the adsorbed substance desorbing means 3 becomes the combustion temperature near the burning temperature (400 °C to 500 °C) or the burning temperature or less. For example, when the burning temperature is 450 °C, the combustion temperature is set to a temperature near 450 °C or a temperature at 450 °C or less.

The combustion apparatus 5 disposed on the most downstream side of the exhaust gas includes a fuel nozzle 6, an igniter 7 and air supply means 15. In the state in which the combustion apparatus 5 is operated, an over-rich combustion region X1 and a lean fuel combustion region X2 can be formed on the exhaust gas upstream side and downstream side of the air supply means 15. The fuel nozzle 6 is connected to a fuel tank 11 through the fuel amount regulating apparatus 10. In the fuel nozzle 6, the supply amount and supply timing of the fuel are controlled by the electronic control unit 12. The air supply means 15 is connected to the air supply source 17 through the air amount regulating apparatus 16. In the air amount regulating apparatus 16, the supply amount and supply timing of the air are controlled by the ECU 12.

In the case where the NOx adsorbent 4 does not contain the noble metal such as platinum, the combustion apparatus 5 controls the supply amount of the fuel and supply amount of the air such that the over-rich combustion region X1 and lean fuel combustion region X2 are formed on the exhaust gas upstream side and downstream side of the air supply means 15. On the other hand, in the case where the NOx adsorbent 4 contains the noble metal such as platinum like the present embodiment, the fuel supply amount is decreased and the air supply amount is increased, and the control can be performed such that only the lean fuel combustion region X2 is formed.

### (Working of the Embodiment)

In the case where the internal combustion engine 1 is operated, the switching valve 20 switches the connection of the exhaust passage 2 to utilize one of the branch exhaust passages 2a and 2b as the exhaust gas discharge passage of the internal combustion engine 1. The regenerating operation is performed in the other of the branch exhaust passages 2a and 2b if needed. In the state of Fig. 1, the second branch exhaust passage 2b is used as the exhaust gas passage, while the first branch exhaust passage 2a is used for the regenerating operation.

During the operation of the internal combustion engine 1, the combustion apparatus 5 and the adsorbed substance desorbing means 3 are stopped in the second branch exhaust passage 2b utilized as the exhaust gas discharge passage in Fig. 1. Because the internal combustion engine 1 is operated under the excessive air condition, a small amount of the CO or the like is contained in the exhaust gas while a large amount of the NOx is probably contained in the exhaust gas. The exhaust gas flows from the exhaust passage 2 into the second branch exhaust passage 2b, a particulate substance is removed by a fine particle filter 40, the NOx is adsorbed to the NOx adsorbent 4, and the detoxified exhaust gas is discharged through the exhaust passage 2c on the downstream side.

On the other hand, the combustion apparatus 5 and the adsorbed substance desorbing means 3 are operated in the first branch exhaust passage 2a in which the regenerating operation is performed. In the adsorbed substance desorbing means 3, the fuel from the fuel nozzle 31 is burned with the air from the air supply means 33, whereby the high-temperature air is supplied to the NOx adsorbent 4 to desorb the NOx from the NOx adsorbent 4. That is, the NOx adsorbent 4 is regenerated. In this case, because the combustion temperature of the adsorbed substance desorbing means 3 is closes to the burning temperature of the NOx adsorbent 4 or not more than the burning temperature, the sintering and the destruction of lithium (Li) by fire are not generated.

In the case where the platinum (Pt) is added to the NOx adsorbent 4, during the regenerating operation, the NOx is reduced into the N₂ by the catalytic action of platinum, the NOx is detoxified and discharged as in the present invention.

In the case where the noble metal is not added to the NOx adsorbent 4, as described above, the over-rich combustion region X1 and the lean fuel combustion region X2 are formed in the combustion apparatus 5, which allows the NOx desorbed from the NOx adsorbent 4 to be reduced into the N₂ in the over-rich combustion region X1.

In the lean fuel combustion region X2 of the combustion apparatus 5, the CO and the hydrocarbon are oxidized and detoxified into the CO₂ and the H₂O, and are discharged. The N₂ is not oxidized because of the low combustion temperature in the lean fuel combustion region X2. In the case where the noble metal is not added to the NOx adsorbent 4, sometimes the CO and the hydrocarbon are generated in the over-rich combustion region X1, and the CO and the hydrocarbon are oxidized and detoxified in the lean fuel combustion region X2 on the downstream side.

When the NOx adsorbed amount of the NOx adsorbent 4 in the second branch exhaust passage 2b reaches a predetermined amount (saturated amount or regulated amount less than saturated amount) by the several normal operations, the switching valve 20 is switched to the first branch exhaust passage 2a to stop the combustion apparatus 5 and adsorbed substance desorbing means 3 in the first branch exhaust passage 2a, while the combustion apparatus 5 and adsorbed substance desorbing means 3 in the second branch exhaust passage 2b are operated. That is, the normal operation is performed in the first branch exhaust passage 2a, and the regenerating operation is simultaneously performed in the second branch exhaust passage 2b.

### (Effect of the Embodiment)

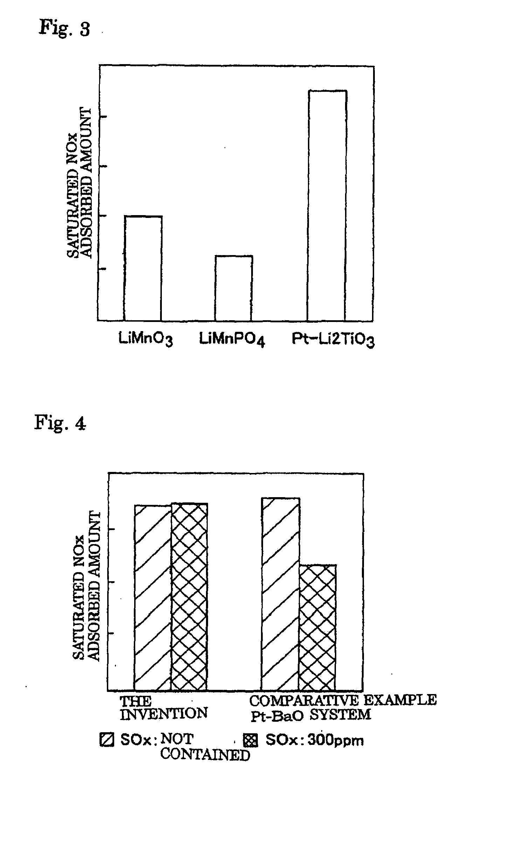

(1) As shown in Fig. 1, the exhaust passage 2 of the exhaust gas purifier is branched into the two branch exhaust passages 2a and 2b, one of the branch exhaust passages 2a and 2b is used as the exhaust gas discharge passage during the normal operation, and the nitrogen oxide desorbing means 3 and combustion apparatus 5 are operated to perform the regenerating operation by blocking the other from the exhaust passage 2 of the engine. Therefore, the amount of air used for the adsorbed substance desorption and the combustion apparatus is set irrespective of the exhaust gas amount from the internal combustion engine 1, so that the amount of fuel supplied from the adsorbed substance desorbing means 3 and the amount of fuel supplied in the combustion apparatus 5 can be saved. Obviously the regenerating operation can be performed without performing the complicated lean and rich control on the engine side.
(2) Because the fine particle filter 40 is disposed on the upstream side of the NOx adsorbent 4, the exhaust gas in which the particulate substance is removed by the fine particle filter 40 can be caused to flow in the NOx adsorbent 4 during the normal operation (used as the exhaust gas discharge passage). Accordingly, the decrease in adsorption of the NOx adsorbent can be prevented.
(3) When the platinum (Pt) which is of the noble metal is added to the NOx adsorbent 4, the saturated NOx adsorbed amount can significantly be increased. Fig. 3 is a graph in which the saturated NOx adsorbed amounts of the lithium composite oxides are compared among lithium manganate (LiMnO₃) to which the noble metal is not added, LiMnPO₄ to which the noble metal is not added, and Pt-Li₂TiO₃ to which the platinum (Pt) of the noble metal is added. The saturated NOx adsorbed amount can sufficiently be ensured even in the lithium manganate (LiMnO₃) and lithium manganate phosphate (LiMnPO₄) to which the noble metal is not added. However, in the case of the lithium titanate (Pt-Li₂TiO₃) to which the platinum is added, because the saturated NOx adsorbed amount can be ensured about twice to three times the lithium manganate (LiMnO₃) and lithium manganate phosphate (LiMnPO₄), it is found that the platinum-added lithium titanate (Pt-Li₂TiO₃) has the good NOx adsorbing performance.
(4) When the lithium titanate (Li₂TiO₃) is used as the NOx adsorbent 4, the NOx adsorbent 4 having a good SOx-resistant property can be provided. Therefore, the poisoning of the NOx adsorbent 4 can be prevented to lengthen the lifetime. Fig. 4 is a graph showing the SOx-resistant property of the NOx adsorbent 4. The left two graphs according to the present invention indicate the NOx adsorbent 4 made of the platinum-added lithium titanate (Pt-Li₂TiO₃), and the right two graphs which are of comparative examples indicate the NOx adsorbent 4 made of platinum-added barium oxide (Pt-BaO system). Each slant-line graph indicates the saturated NOx adsorbed amount in the case where the SOx is not contained in the exhaust gas flowing through the NOx adsorbent 4, and each cross-line graph indicates the saturated NOx adsorbed amount in the case where the SOx having 300-ppm is contained in the exhaust gas flowing through the NOx adsorbent 4. As can be seen from the graph of Fig. 4, in the NOx adsorbent 4 made of platinum-added lithium titanate (Pt-Li₂TiO₃), the saturated NOx adsorbed amount similar to that of the case in which the SOx is not contained in the exhaust gas is ensured even in the case where the SOx is contained in the exhaust gas. On the other hand, in the NOx adsorbent 4 made of platinum-added barium oxide (Pt-BaO system), the saturated NOx adsorbed amount is largely decreased in the case where the SOx is contained in the exhaust gas.

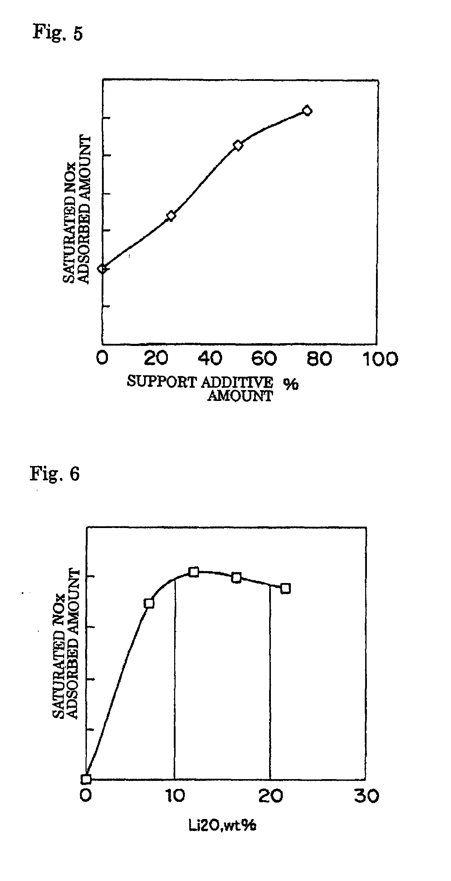

(5) Fig. 5 is a graph showing a change in saturated NOx adsorbed amount in the case of a change in weight ratio of the NOx adsorbent 4 made of the platinum-added lithium titanate (Pt-Li₂TiO₃) and the aluminum oxide (Al₂O₃) and/or titanium oxide (TiO₂) which is of a support for supporting the platinum-added lithium titanate. When the weight ratio of the support ranges from 0 to 80%, the saturated NOx adsorbed amount is increased in proportion to the increase in support. Accordingly, it is preferably to set the weight ratio of the aluminum oxide (Al₂O₃) in the range of about 80% to approximately 95%.
(6) Fig. 6 is a graph showing a relationship between the saturated NOx adsorbed amount and an additive amount as lithium oxide (Li₂O) for the NOx adsorbent 4. As can be seen from Fig. 6, the saturated NOx adsorbed amount is substantially maintained at the maximum value when the additive amount which is of the lithium oxide (Li₂O) ranges from 10 to 20 weight%. Accordingly, the lithium oxide (Li₂O) is added in the range of 10 to 20 weight% in the whole of nitrogen oxide adsorbent, which allows the saturated NOx adsorbed amount to be increased to improve the NOx absorbing power.

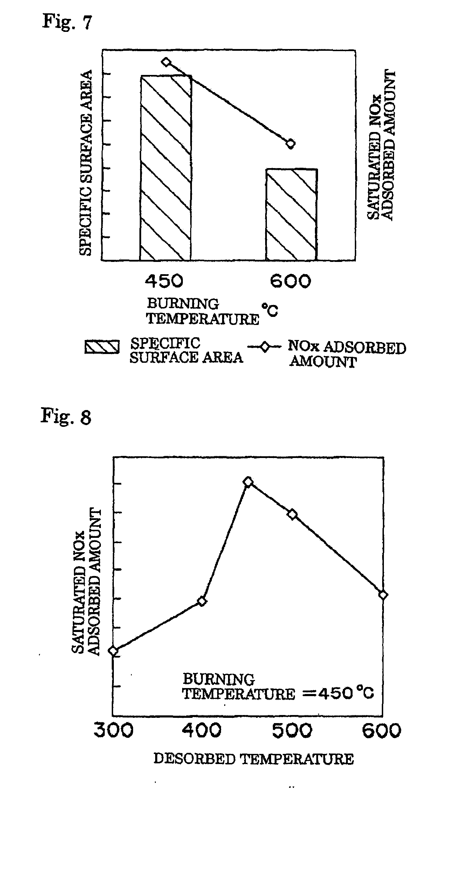

(7) Fig. 7 is a graph showing a relationship between a specific surface area, the saturated NOx adsorbed amount, and a temperature at which the NOx adsorbent 4 is burned. In Fig. 7, the burning temperatures at 450 °C and 600 °C are compared to each other. As can be seen from Fig. 7, compared with the burning temperature of 600 °C, the large specific surface area and the large saturated NOx adsorbed amount are obtained at the burning temperature of 450 °C. Therefore, the NOx adsorbent 4 burned at 450 °C has the good NOx absorbing power.
(8) Fig. 8 is a graph showing a relationship between the saturated NOx adsorbed amount and a temperature of the adsorbed substance desorbing means 3 in the case where the NOx adsorbent 4 is burned at 450 °C. As can be seen from Fig. 8, the maximum saturated NOx adsorbed amount can be obtained near the burning temperature of 450 °C, and the saturated NOx adsorbed amount is rapidly decreased when the burning temperature is higher than 450 °C or when the burning temperature is lower than 450 °C. However, when the temperature of the adsorbed substance desorbing means 3 is higher than the burning temperature, because a possibility of generating the sintering or destruction of lithium (Li) by fire is enhanced, it is found that the adsorbed substance desorbing means 3 is optimally set to the temperature near the burning temperature of 450 °C during the regenerating operation.

### (Second Embodiment of the Invention)

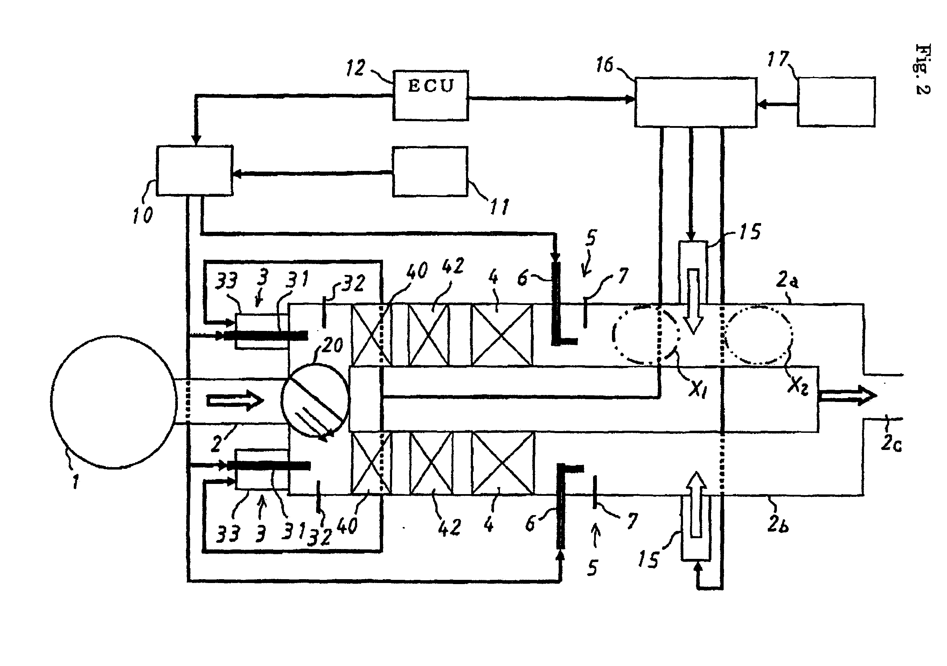

Fig. 2 shows a second embodiment of an exhaust gas purifier according to the invention. When compared with the first embodiment of Fig. 1, a sulfur oxide adsorbent (hereinafter referred to as "SOx adsorbent") 42 is disposed between the fine particle filter 40 and the NOx adsorbent 4. Other configurations of the second embodiment are similar to those of Fig. 1, and identical component is designated by identical numeral.

In the second embodiment, the SOx adsorbent 42 is made of copper oxide and zirconium oxide, and a metal ratio of copper and zirconium is 1:1.

### (Working of Second Embodiment)

The working of the second embodiment is basically similar to that of the first embodiment of Fig. 1 except for the working of the SOx adsorbent 42, so that only the working of the SOx adsorbent 42 will be described.

During the normal operation of the internal combustion engine 1, the SOx in the exhaust gas is adsorbed to the SOx adsorbent 42. Therefore, the SOx does not flow into the NOx adsorbent 4, and the NOx adsorbent 4 can be prevented from being poisoned by the sulfur. Particularly, in the case where the lithium oxide except for the noble metal-added lithium titanate (Pt-Li₂TiO₃) is used as the NOx adsorbent 4, the SOx adsorbent 42 is disposed on the upstream side of the NOx adsorbent 4 because of a low SOx-resistant property, which allows the poisoning of the NOx adsorbent 4 to be prevented.

During the regenerating operation, the high-temperature air is also supplied to the SOx adsorbent 42 from the adsorbed substance desorbing means 3 to desorb the SOx adsorbed to the SOx adsorbent 42. That is, the SOx adsorbent 42 is regenerated. The desorbed SOx is directly discharged. As described above, because the desorbing action is also performed in the NOx adsorbent 4 during the regenerating operation, there is no fear that the SOx desorbed from the SOx adsorbent 42 is re-adsorbed to the NOx adsorbent 4.

As described above, when the metal ratio of the copper and zirconium is 1:1 in the sulfur oxide adsorbent 42 made of the copper oxide and zirconium oxide, the sulfur oxide adsorbed amount can be increased.

The copper oxide and zirconium oxide can reversibly adsorb and desorb the sulfur oxide. Therefore, in the exhaust gas purifier in which the nitrogen oxide desorbing means provided on the upstream side of the nitrogen oxide adsorbent while the combustion apparatus is provided on the downstream side, by switching between the normal operation and the regenerating operation, the nitrogen oxide is adsorbed to the nitrogen oxide adsorbent and the sulfur oxide is simultaneously adsorbed to the sulfur oxide adsorbent during the excessive air combustion of the normal operation, and then the nitrogen oxide and sulfur oxide adsorbed to the adsorbents are desorbed during the over-rich combustion of the regenerating operation, and the nitrogen oxide can be detoxified on the downstream side of the combustion apparatus and discharged to the atmosphere.

### (Third Embodiment of the Invention)

Metal oxide which does not contain the noble metal is used as the NOx adsorbent 4 of the exhaust gas purifier shown in Fig. 2. Particularly, the metal oxide can efficiently adsorb the NOx in the excessive air atmosphere, and the metal oxide desorbs the adsorbed NOx when the metal oxide is heated to a predetermined temperature or when the exhaust gas is converted into the reducing atmosphere. For example, the NOx adsorbent 4 is made of the transition metal oxide containing the manganese oxide and zirconium oxide, and the compounding ratio of the manganese oxide and zirconium oxide becomes 1:1 in terms of metal ratio.

In the third embodiment, the SOx adsorbent 42 is made of the copper oxide and zirconium oxide, and the metal ratio of the copper and zirconium becomes 1:1.

### (Working of the Embodiment)

In Fig. 2, in the case where the internal combustion engine 1 is operated, the switching valve 20 switches the connection of the exhaust passage 2 to utilize one of the branch exhaust passages 2a and 2b as the exhaust gas discharge passage of the internal combustion engine 1. The regenerating operation is performed in the other of the branch exhaust passages 2a and 2b if needed. In the state of Fig. 2, the second branch exhaust passage 2b is used as the exhaust gas passage of the internal combustion engine 1, while the first branch exhaust passage 2a is used for the regenerating operation.

During the operation of the internal combustion engine 1, the combustion apparatus 5 and the adsorbed substance desorbing means 3 are stopped in the second branch exhaust passage 2b utilized as the exhaust gas discharge passage in Fig. 2. Because the internal combustion engine 1 is operated under the excessive air condition, the small amount of the CO or the like is contained in the exhaust gas while the large amount of the NOx is probably contained in the exhaust gas. The exhaust gas flows from the exhaust passage 2 into the second branch exhaust passage 2b, the particulate substance is removed by the fine particle filter 40, the SOx is adsorbed to the SOx adsorbent 42, the NOx is adsorbed to the NOx adsorbent 4, and the detoxified exhaust gas is discharged through the exhaust passage 2c on the downstream side.

On the other hand, the combustion apparatus 5 and the adsorbed substance desorbing means 3 are operated in the first branch exhaust passage 2a in which the regenerating operation is performed. In the adsorbed substance desorbing means 3, the fuel from the fuel nozzle 31 is burned with the air from the air supply means 33, whereby the high-temperature air is supplied to the NOx adsorbent 4 to desorb the NOx from the NOx adsorbent 4. That is, the NOx adsorbent 4 is regenerated.

The exhaust gas is blocked from the internal combustion engine 1 in the first branch exhaust passage 2a in the regenerating operation state, and the first branch exhaust passage 2a is operated independently of the second branch exhaust passage 2b in the normal operation state, and the regenerating operation is performed in the first branch exhaust passage 2a by the fuel supply and air supply of the adsorbed substance desorbing means 3 and the fuel supply and air supply of the combustion apparatus 5. Therefore, the amount of air used for the adsorbed substance desorption and the combustion apparatus is set irrespective of the exhaust gas amount from the internal combustion engine 1, so that the amount of fuel supplied from the adsorbed substance desorbing means 3 and the amount of fuel supplied in the combustion apparatus 5 can be saved. During the regenerating operation, the adsorbed substance desorbing means 3 is burned in the over-rich combustion state, so that the NOx adsorbent 4 can be heated while the exhaust gas is converted into the reducing atmosphere. Therefore, the desorbing performance can be improved and the NOx is not generated by the burning of the adsorbed substance desorbing means 3.

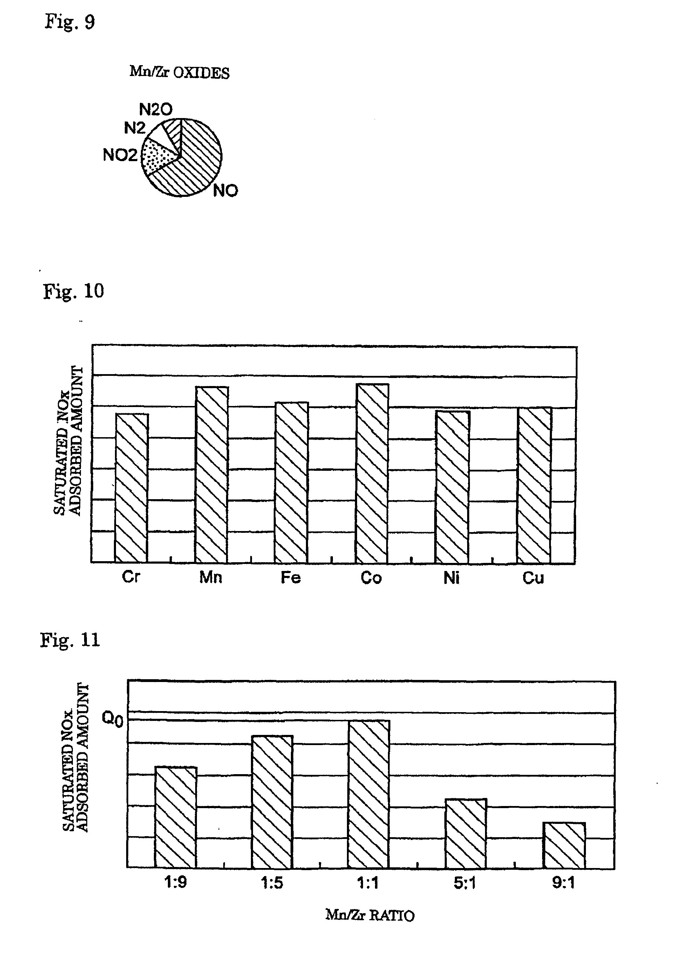

Fig. 9 shows a component ratio of substances desorbed from the NOx adsorbent 4 during the regenerating operation. About 8% of the whole of the substances is desorbed in the form of the nitrogen (N₂), and 90% or more is desorbed in the form of the nitrogen oxide (NOx) such as the NO, the NO₂, and the N₂O. Thus, most substances are desorbed in the form of the NOx, the desorbed NOx is reduced into the detoxified the N₂ in the over-rich combustion region X1 of the combustion apparatus 5 on the downstream side of Fig. 2, and the detoxified the N₂ is discharged to the atmosphere. On the other hand, although the CO or the hydrocarbon is generated in the over-rich combustion region X1, the CO or the hydrocarbon is oxidized into the CO₂ in the lean fuel combustion region X2 on the downstream side, and discharged to the atmosphere. The N₂ generated in the over-rich combustion region X1 is not oxidized because of the low combustion temperature in the lean fuel combustion region X2.

The high-temperature air is also supplied to the SOx adsorbent 42 from the adsorbed substance desorbing means 3 to desorb the SOx adsorbed to the SOx adsorbent 42. That is, the SOx adsorbent 42 is regenerated. The desorbed SOx is directly discharged. As described above, because the desorbing action is also performed in the NOx adsorbent 4 during the regenerating operation, there is no fear that the SOx desorbed from the SOx adsorbent 42 is re-adsorbed to the NOx adsorbent 4.

When the NOx adsorbed amount of the NOx adsorbent 4 in the second branch exhaust passage 2b reaches a predetermined amount (saturated amount or regulated amount less than saturated amount) by the several normal operations, the switching valve 20 is switched to the first branch exhaust passage 2a to stop the combustion apparatus 5 and adsorbed substance desorbing means 3 in the first branch exhaust passage 2a, while the combustion apparatus 5 and adsorbed substance desorbing means 3 in the second branch exhaust passage 2b are operated. That is, the normal operation is performed in the first branch exhaust passage 2a, and the regenerating operation is simultaneously performed in the second branch exhaust passage 2b.

### (Effect of the Embodiment)

(1) Fig. 10 is a graph in which the saturated NOx adsorbed amount of typical transition metal oxides are compared. The manganese Mn and the cobalt Co have the highest saturated NOx adsorbed amount, and the iron Fe, the copper Cu, the nickel Ni, and the chromium Cr and the like are ranked. This is because the manganese oxide and the cobalt oxide have the strongest oxidizing power to easily generate NOx in the transition metal oxide. The saturated NOx adsorbed amount is substantially proportional to the NOx adsorbed amount per unit time. Thus, when the manganese oxide is used as the NOx adsorbent 4 like the present embodiment, the saturated NOx adsorbed amount and the NOx adsorbed amount per unit time can be increased. Accordingly, NOx can effectively be adsorbed and a frequency of the regenerating operation can economically be decreased.
(2) Fig. 11 shows the saturated NOx adsorbed amount in various metal ratios by changing the metal ratio of manganese and zirconium in the case where the transition metal oxide (not containing the noble metal) made of the manganese oxide and zirconium oxide is used as the NOx adsorbent 4. As can be seen from the graph of Fig. 11, the highest saturated NOx adsorbed amount (Q0) is obtained when the metal ratio of the manganese and zirconium (Mn:Zr) is 1:1, and then the saturated NOx adsorbed amount is decreased in the order of the metal ratio of 1:5, the metal ratio of 1:9, the metal ratio of 5:1, and the metal ratio of 9:1. Accordingly, in the present embodiment, when the metal ratio of the manganese and zirconium is set to 1:1, the large-capacity saturated NOx adsorbed amount can be ensured as the NOx adsorbent 4.

### (Fourth Embodiment of the Invention)

Oxide of yttrium Y is added to the transition metal oxide (metal ratio of 1:1) made of the manganese oxide and zirconium oxide as the NOx adsorbent 4 of the exhaust gas purifier shown in Fig. 2. The additive amount of yttrium oxide ranges from 0.1 to 0.5 weight% in the whole of the NOx adsorbent 4, and preferably the additive amount of yttrium oxide is set to about 0.2 weight%.

When the yttrium oxide is added to the nitrogen oxide adsorbent 4, the nitrate is easily formed, the yttrium oxide can react with the generated NO₂ to absorb the nitrogen oxide in the state of the nitrate. Therefore, the saturated NOx adsorbed amount can further be increased.

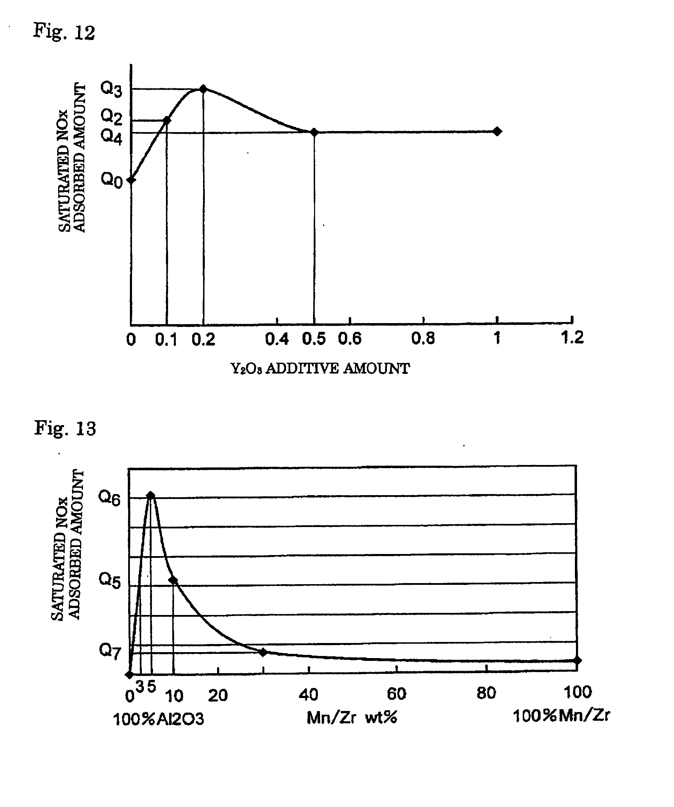

Fig. 12 shows a change in saturated NOx adsorbed amount of the NOx adsorbent 4 to a change in additive amount of yttrium oxide (Y₂O₃).
In the case where the additive amount of yttrium oxide is 0 weight%, the saturated NOx adsorbed amount Q0 corresponds to saturated NOx adsorbed amount Q0 in which the metal ratio of Fig. 4 is 1:1. When the additive amount of yttrium oxide is increased from 0 weight% to about 0.2 weight%, the saturated NOx adsorbed amount is rapidly increased to a maximum value Q3 through a value Q2 at 0.1 weight%. When the additive amount of yttrium oxide is increased from about 0.2 weight% to about 0.5 weight%, the saturated NOx adsorbed amount is gently decreased from the maximum value Q3 to a value Q4 (<Q2) through the value Q2 at the 0.1 weight%. When the additive amount of yttrium oxide exceeds about 0.5 weight%, the saturated NOx adsorbed amount is kept at the value Q4, so that there is no increase and decrease in the saturated NOx adsorbed amount. Accordingly, in order to economically increase the saturated NOx adsorbed amount, preferably the additive amount of yttrium oxide ranges from 0.1 to 0.5 weight% like the present embodiment, and most preferably the additive amount of yttrium oxide is set to about 0.2 weight%.

### (Fifth Embodiment of the Invention)

Aluminum oxide is added to the transition metal oxide (metal ratio of 1:1) made of the manganese oxide and zirconium oxide in the NOx adsorbent 4 disposed in the exhaust gas purifier shown in Fig. 2. The aluminum oxide Al₂O₃ is porous and has the high specific surface area. The aluminum oxide is used as the support, and the manganese oxide and zirconium oxide are supported by the aluminum oxide. Therefore, the utilization ratio of the active site is improved, and the saturated NOx adsorbed amount and the NOx adsorbed amount per unit time are increased.

The proportions of the manganese oxide and zirconium oxide to the whole of the NOx adsorbent 4 range from 3 weight% to 10 weight%, and preferably the proportions is set to about 5 weight%. In other words, the proportion of the aluminum oxide ranges from 97 to 90% in the whole of NOx adsorbent 4, and preferably the proportion of the aluminum oxide is set to about 95%.

Fig. 13 shows a relationship between the saturated NOx adsorbed amount and a change in ratio of the manganese oxide and zirconium oxide to the whole NOx adsorbent 4. When the manganese oxide and zirconium oxide are 0 weight%, as shown in a left end of the graph, the aluminum oxide is 100% and the saturated NOx adsorbed amount becomes substantially zero. When the proportions of the manganese oxide and zirconium oxide is increased from 0 weight% to about 5 weight%, the saturated NOx adsorbed amount is rapidly increased to a maximum value Q6 through a value Q5 at 3 weight%. When the proportions of the manganese oxide and zirconium oxide is increased from 5 weight% to about 30 weight%, the saturated NOx adsorbed amount is decreased from the maximum value Q6 to a value Q7 through the value Q5 at the 3 weight%. When the proportions of the manganese oxide and zirconium oxide exceeds 30 weight%, the saturated NOx adsorbed amount is substantially kept at the value Q7. Accordingly, in order to effectively increase the saturated NOx adsorbed amount, preferably the proportions of the manganese oxide and zirconium oxide to the whole of NOx adsorbent 4 ranges from 3 weight% to 10 weight%, and most preferably the additive amount of yttrium oxide is set to about 5 weight%.

### (Sixth Embodiment)

A transition metal oxide made of oxide of cobalt Co and oxide of zirconium Zr is used as the NOx adsorbent 4 disposed in the exhaust gas purifier of Fig. 2. The proportion of the cobalt oxide to the whole of NOx adsorbent 4 ranges from 0.1 weight% to 1 weight%, and preferably the proportion of the cobalt oxide is set to about 0.5 weight%. The cobalt oxide has the strong oxidizing power similar to that of the manganese oxide, and the saturated NOx adsorbed amount similar to that of the manganese oxide can be obtained by the cobalt oxide as shown in Fig. 10.

Fig. 14 shows the change in saturated NOx adsorbed amount to the change in additive amount of the cobalt oxide. When the additive amount of cobalt oxide is increased from 0.1 weight% to about 0.5 weight%, the saturated NOx adsorbed amount is rapidly increased from a value Q10 to a maximum value Q11. When the additive amount of cobalt oxide is increased from about 0.5 weight% to about 1 weight%, the saturated NOx adsorbed amount is decreased from the maximum value Q11 to a value Q12 (>value Q10). When the additive amount of cobalt oxide exceeds about 1 weight%, the saturated NOx adsorbed amount is substantially kept at the value Q12. Accordingly, in order to economically increase the saturated NOx adsorbed amount, preferably the additive amount of cobalt oxide ranges from 0.1 to 1 weight%, and most preferably the additive amount of cobalt oxide is set to about 0.5 weight%.

### (Seventh Embodiment of the Invention)

A sulfur oxide adsorbent 42 made of noble metal and lithium titanium composite oxide (Li/TiO₂) is provided as the SOx adsorbent 42 disposed in the exhaust gas purifier of Fig. 2. Examples of the noble metal include platinum Pt and rhodium Rh or the like.

As with the sulfur oxide adsorbent made of the manganese oxide and zirconium oxide of the first embodiment, the sulfur oxide adsorbent 42 made of the noble metal and lithium titanium composite oxide has the good SOx absorbing power and is able to reversibly adsorb and desorb the SOx. Therefore, as shown in Fig. 2, the adsorption and desorption can be performed without performing the lean and rich control on the engine side in the exhaust gas purifier including the adsorbed substance desorbing means 3 and combustion apparatus 5.

### INDUSTRIAL APPLICABILITY

The present invention can be used as the exhaust gas purifier for various machines which discharge the exhaust gas, and the invention can be applied to the internal combustion engines such as the diesel engine, the gas engine, the gasoline engine, and the gas turbine engine or the combustion instruments such as the incinerator and the boiler.

## Claims

1. An exhaust gas purifier being installed in an exhaust passage of an internal combustion engine or a combustion instrument,
the exhaust gas purifier comprising:
a nitrogen oxide adsorbent temporarily adsorbing nitrogen oxide even in an excessive air atmosphere and desorbing the adsorbed nitrogen oxide by heating or reducing atmosphere;
adsorbed substance desorbing means being disposed on an exhaust gas upstream side of the nitrogen oxide adsorbent, the adsorbed substance desorbing means heating the exhaust gas or air or converting the exhaust gas or air into a reducing atmosphere; and
a combustion apparatus being disposed on an exhaust gas downstream side of the nitrogen oxide adsorbent,
wherein the nitrogen oxide adsorbent is made of metal oxide which does not contain noble metal.

2. The exhaust gas purifier according to claim 1, **characterized in that** the nitrogen oxide adsorbent is made of transition metal oxide.

3. The exhaust gas purifier according to claim 2, **characterized in that** the nitrogen oxide adsorbent is made of transition metal oxide containing manganese oxide and zirconium oxide.

4. The exhaust gas purifier according to claim 3, **characterized in that** a compounding ratio of manganese oxide and zirconium oxide in the nitrogen oxide adsorbent is 1:1 in terms of metal ratio.

5. The exhaust gas purifier according to claim 3 or 4, **characterized in that** the nitrogen oxide adsorbent further contains yttrium oxide.

6. The exhaust gas purifier according to claim 5, **characterized in that** the yttrium oxide ranges from 0.1 to 0.5 weight% in a whole of the nitrogen oxide adsorbent.

7. The exhaust gas purifier according to claim 3, **characterized in that** the nitrogen oxide adsorbent further contains aluminum oxide.

8. The exhaust gas purifier according to claim 7, **characterized in that** proportions of manganese oxide and zirconium oxide in the nitrogen oxide adsorbent range from 3 to 10 weight% in a whole of the nitrogen oxide adsorbent.

9. The exhaust gas purifier according to claim 2, **characterized in that** the nitrogen oxide adsorbent is made of transition metal oxide containing cobalt oxide and zirconium oxide_

10. The exhaust gas purifier according to claim 9, **characterized in that** cobalt oxide ranges from 0.1 to 1 weight% in a whole of the adsorbent in the nitrogen oxide adsorbent.

11. The exhaust gas purifier as in any one of claims 1 to 10, **characterized in that** a sulfur oxide adsorbent is disposed on an exhaust gas upstream side of the nitrogen oxide adsorbent.

12. The exhaust gas purifier according to claim 11, **characterized in that** the sulfur oxide adsorbent contains copper oxide and zirconium oxide.

13. The exhaust gas purifier according to claim 12, **characterized in that** a metal ratio a metal ratio of copper and zirconium is 1:1 in the sulfur oxide adsorbent.

14. The exhaust gas purifier according to claim 11, **characterized in that** the sulfur oxide adsorbent contains noble metal and lithium titanium composite oxide.
